# EUROPÄISCHE PATENTANMELDUNG

(11) **EP 2 362 520 A1**
(43) Veröffentlichungstag der Anmeldung: **31.08.2011**
(21) Anmeldenummer: 10002013.0
(22) Anmeldetag: 26.02.2010
(51) Int. Cl.: H02J 3/38, H02H 7/122, H02H 7/18

(54) **Wechselrichter für Photovoltaikanlagen**

(71) Anmelder: Ziehl-Abegg AG, 74653 Künzelsau (DE)
(72) Erfinder: Leutwein, Gerhard, 74653 Künzelsau (DE)
(74) Vertreter: Samson & Partner

(57) **Zusammenfassung**

Die Erfindung betrifft einen Wechselrichter für Solarpanele, welcher wenigstens zwei Wechselrichtereingänge, an denen jeweils eine Gruppe von Solarpanelen anschließbar ist, und einen Wechselrichterausgang, an den ein Netz anschließbar ist, umfasst. Der Wechselrichter umfasst ein Wechselrichterelement mit einem Gleichspannungseingang und einem Wechselspannungsausgang, das die an seinem Gleichspannungseingang anliegende Gleichspannung in eine Wechselspannung umwandelt und dem Wechselrichterausgang bereitstellt, eine Steuerelektronik, die die am Gleichspannungseingang des Wechselrichterelements anliegende Gleichspannung und die Netzspannung und/oder die Netzfrequenz des am Wechselrichterausgang anliegenden Netzes überwacht, eine Schalteinrichtung, die elektrisch zwischen einem der wenigstens zwei Wechselrichtereingänge und dem Gleichspannungseingang des Wechselrichterelements angeordnet ist, wobei die beiden wenigstens zwei Wechselrichtereingänge des Wechselrichters in Reihe mit dem Gleichspannungseingang des Wechselrichterelements verbunden sind. Die Steuerelektronik ist derart ausgestaltet, dass sie die Schalteinrichtung veranlasst, den wenigstens einen Wechselrichtereingang des Wechselrichters vom Gleichspannungseingang des Wechselrichterelements zu trennen, falls die am Gleichspannungseingang des Wechselrichterelements anliegende Spannung einen oberen Schwellwert überschreitet und/oder die Netzspannung und/oder -frequenz des am Wechselrichterausgang anliegenden Netzes außerhalb eines vorgegebenen Normspannungs- bzw. Normfrequenzbereiches liegt.

Die Erfindung betrifft ferner ein Verfahren zur Steuerung eines Wechselrichters für Solarpanele.

## Beschreibung

### Gebiet der Erfindung

Die Erfindung bezieht sich auf das Gebiet der Wechselrichter für Photovoltaikanlagen und insbesondere auf einen Wechselrichter, der mit Hilfe einer Steuerelektronik mit einer hohen Leerlaufspannung sowohl unter Last als auch im Leerlauf arbeiten kann.

### Hintergrund der Erfindung

Die Umwandlung von Lichtenergie in elektrische Energie unter Verwendung photovoltaischer Systeme ist seit langem bekannt. Diese photovoltaischen Systeme werden zunehmend im Wohn-, Wirtschafts- und Industriebereich eingesetzt. Photovoltaische Systeme umfassen typischerweise unter anderen Komponenten Solarpanele, die zu mehreren in Reihe geschaltet (= photovoltaischer String) eine hohe Gleichspannung erzeugen, und einen Wechselrichter, der den Gleichstrom in Wechselstrom (z.B. einphasigen oder dreiphasigen Strom) umwandelt. Üblicherweise wird die Anzahl der zu einem String in Reihe geschalteten Solarpanele entsprechend der gewünschten Leerlaufspannung des Strings bei niedriger Umgebungstemperatur (z.B. -10°C) gewählt. Es ist oft wünschenswert, photovoltaische Strings zu entwerfen und zu betreiben, die eine möglichst hohe Spannung und damit einhergehend eine geringere Stromstärke ausgeben, um Kosten für Elemente hoher Stromverträglichkeit und auch Energieverluste bei der Stromübertragung zu reduzieren. Aufgrund bestehender Normen und auch aufgrund einer zulässigen Maximalspannung des Strings ist die Maximalleerlaufspannung zur Zeit auf 1000V begrenzt.

Wechselrichter sind für eine Vielzahl von Spannungsverträglichkeiten verfügbar, wobei mit zunehmender Spannungsverträglichkeit auch die Kosten des jeweiligen Wechselrichters und dessen Verlustleistung steigen.

Die heute auf dem Markt verfügbaren Wechselrichter speisen zwischen einer Phase und dem Nullleiter ein. Die verfügbaren dreiphasigen Wechselrichter beinhalten drei einphasige Wechselrichter in einem Gehäuse, die dann in alle drei Phasen jeweils gegen den Nullleiter einspeisen. Die modernsten Wechselrichter für Solarpanele sind auf eine maximale Gleichstromleerlaufspannung von 850 V ausgelegt. Die Lastspannung der Solarpanele (d.h. wenn sie mit einem Stromabnehmer verbunden sind) ist jedoch erheblich niedriger als die Leerlaufspannung. Bei 850 V Leerlaufspannung ist eine maximale Lastspannung in der Größenordnung von 650 V möglich. Für eine Einspeisung ins dreiphasige 400 V Netz über einen dreiphasig ausgelegten Wechselrichter unter Berücksichtigung der üblichen Toleranzen und des Spannungsabfalls an den Filterdrosseln wird eine Gleichspannung von mindestens 650 V im Teillastbereich benötigt. Um dies zu ermöglichen, muss die Anlage auf eine Leerlaufspannung von mindestens 1100 V ausgelegt werden, was jedoch laut Norm nicht zulässig ist. Unter Berücksichtigung der Norm steht daher nicht genügend Spannung zur Verfügung, um beispielsweise eine dreiphasige Einspeisung in ein 400V Netz ohne zusätzlichen Hochsetzsteller vorzunehmen. Bei einer Netzspannung von 480 V werden entsprechend eine Lastspannung von 710 V und eine Leerlaufspannung von 1200 V benötigt.

In der US 2009/0167097 wird ein Interface bereitgestellt, das nur während einer Anfangs- und Schlussphase in Betrieb ist, um den photovoltaischen String allmählich mit dem Wechselrichter zu verbinden oder von ihm zu trennen. Der photovoltaische String wird allmählich belastet und als Folge wird die Spannung des Systems von einer Anfangsspannung (Leerlaufspannung) zur einer niedrigeren Spannung (z.B. ungefähr eine optimale Spannung für den Wechselrichter) reduziert. Sobald der photovoltaische String belastet ist und die Spannung des photovoltaischen Strings von ihrer Ausgangsspannung reduziert ist, koppelt das Interface den photovoltaischen String mit dem Wechselrichter. Folglich ist der Wechselrichter nicht den möglicherweise schädlichen Leerlaufspannungen des photovoltaischen Strings ausgesetzt. Gemäß dieser Erfindung ist die Effizienz des Systems wesentlich im Vergleich zum Stand der Technik verbessert, da der Wechselrichter aus Silizium hergestellt ist, das bei geringeren Spannungen betrieben wird, als die Leerlaufspannung des photovoltaischen Strings.

### Kurzfassung der Erfindung

Ein Aspekt der Erfindung betrifft einen Wechselrichter für Solarpanele, welcher wenigstens zwei Wechselrichtereingänge, an denen jeweils eine Gruppe von Solarpanelen anschließbar ist, und einen Wechselrichterausgang, an den ein Netz anschließbar ist, umfasst. Der Wechselrichter umfasst ein Wechselrichterelement mit einem Gleichspannungseingang und einem Wechselspannungsausgang, das die an seinem Gleichspannungseingang anliegende Gleichspannung in eine Wechselspannung umwandelt und dem Wechselrichterausgang bereitstellt, eine Steuerelektronik, die die am Gleichspannungseingang des Wechselrichterelements anliegende Gleichspannung und die Netzspannung und/oder die Netzfrequenz des am Wechselrichterausgang anliegenden Netzes überwacht, eine Schalteinrichtung, die elektrisch zwischen einem der wenigstens zwei Wechselrichtereingänge und dem Gleichspannungseingang des Wechselrichterelements angeordnet ist, wobei die beiden wenigstens zwei Wechselrichtereingänge des Wechselrichters in Reihe mit dem Gleichspannungseingang des Wechselrichterelements verbunden sind. Die Steuerelektronik ist derart ausgestaltet, dass sie die Schalteinrichtung veranlasst, den wenigstens einen Wechselrichtereingang des Wechselrichters vom Gleichspannungseingang des Wechselrichterelements zu trennen, falls die am Gleichspannungseingang des Wechselrichterelements anliegende Spannung einen oberen Schwellwert überschreitet und/oder die Netzspannung und/oder -frequenz des am Wechselrichterausgang anliegenden Netzes außerhalb eines vorgegebenen Normspannungs- bzw. Normfrequenzbereiches liegt.

Ein weiterer Aspekt der Erfindung betrifft ein Verfahren zur Steuerung eines Wechselrichters für Solarpanele. Der Wechselrichter umfasst wenigstens zwei Wechselrichtereingänge, an denen jeweils eine Gruppe von Solarpanelen anschließbar ist, und einen Wechselrichterausgang, an den ein Netz anschließbar ist, sowie ein Wechselrichterelement mit einem Gleichspannungseingang und einem Wechselspannungsausgang, das die an seinem Gleichspannungseingang anliegende Gleichspannung in eine Wechselspannung umwandelt und dem Wechselrichterausgang bereitstellt. Das Verfahren umfasst Überwachen der am Gleichspannungseingang des Wechselrichterelements anliegenden Gleichspannung und der Netzspannung und/oder Netzfrequenz des am Wechselrichterausgang anliegenden Netzes, und Trennen des wenigstens einen Wechselrichtereingangs des Wechselrichters vom Gleichspannungseingang des Wechselrichterelements, falls die am Gleichspannungseingang des Wechselrichterelements anliegende Spannung einen oberen Schwellwert überschreitet und/oder die Netzspannung und/oder ―frequenz des am Wechselrichterausgang anliegenden Netzes außerhalb eines vorgegebenen Normspannungs- bzw. Normfrequenzbereiches liegt.

### Kurze Beschreibung der Zeichnung

Ausführungsformen der Erfindung werden nun beispielhaft und unter Bezugnahme auf die beiliegende Zeichnung beschrieben.

Die einzige Figur zeigt einen Wechselrichter für Solarpanele gemäß einer Ausführungsform der Erfindung.

Die Zeichnung und die Beschreibung der Zeichnung beziehen sich auf eine Ausführungsform der Erfindung aber nicht auf die Erfindung selbst.

### Beschreibung der bevorzugten Ausführungsformen

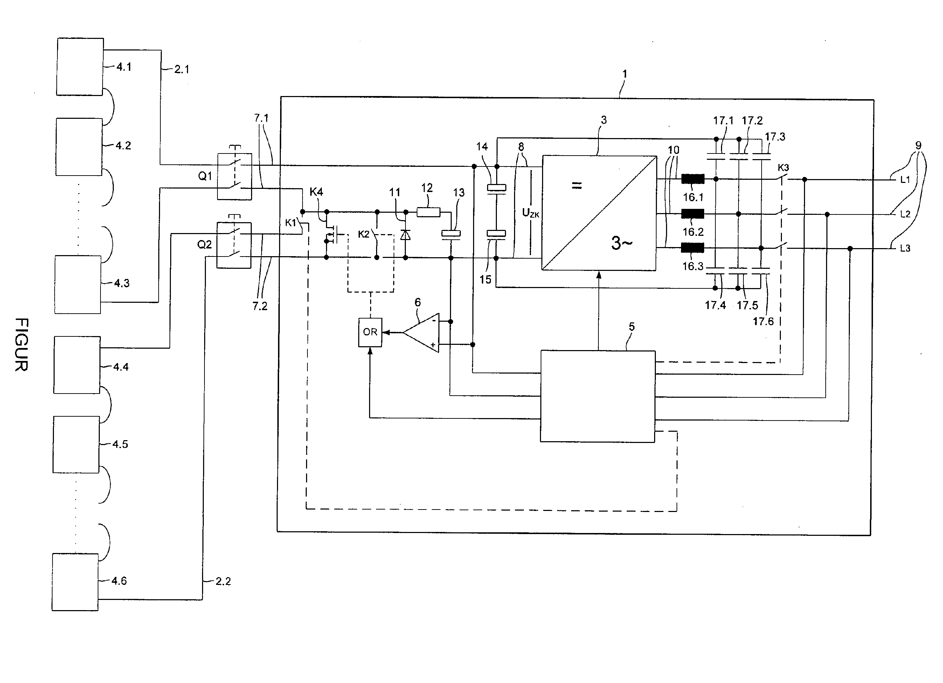

Die Figur zeigt ein Schaltbild eines erfindungsgemäßen Wechselrichters 1 mit einem daran angeschlossenen ersten String 2.1 und einen zweiten String 2.2. Bevor jedoch mit der Beschreibung der Fig. 1 fortgefahren wird, werden ein paar Begriffe der Ausführungsformen erläutert.

Die Ausführungsformen der Erfindung beziehen sich auf einen Wechselrichter für Solarpanele, welcher wenigstens zwei Wechselrichtereingänge, an denen jeweils eine Gruppe von Solarpanelen anschließbar ist, und einen Wechselrichterausgang, an das ein Netz anschließbar ist, umfasst. Der Wechselrichter umfasst ein Wechselrichterelement mit einem Gleichspannungseingang und einem Wechselspannungsausgang, das die an seinem Gleichspannungseingang anliegende Gleichspannung in eine Wechselspannung umwandelt und dem Wechselrichterausgang bereitstellt, eine Steuerelektronik, die die am Gleichspannungseingang des Wechselrichterelements anliegende Gleichspannung und die Netzspannung und/oder die Netzfrequenz des am Wechselrichterausgang anliegenden Netzes überwacht, eine Schalteinrichtung, die elektrisch zwischen einem der wenigstens zwei Wechselrichtereingänge und dem Gleichspannungseingang des Wechselrichterelements angeordnet ist, wobei die beiden wenigstens zwei Wechselrichtereingänge des Wechselrichters in Reihe mit dem Gleichspannungseingang des Wechselrichterelements verbunden sind. Die Steuerelektronik ist derart ausgestaltet, dass sie die Schalteinrichtung veranlasst, den wenigstens einen Wechselrichtereingang des Wechselrichters vom Gleichspannungseingang des Wechselrichterelements zu trennen, falls die am Gleichspannungseingang des Wechselrichterelements anliegende Spannung einen oberen Schwellwert überschreitet und/oder die Netzspannung und/oder -frequenz des am Wechselrichterausgang anliegenden Netzes außerhalb eines vorgegebenen Normspannungs- bzw. Normfrequenzbereiches liegt.

In einigen Ausführungsformen umfasst eine Gruppe von Solarpanelen eine Vielzahl von Solarpanelen, während in anderen Ausführungsformen eine Gruppe von Solarpanelen lediglich ein einziges Solarpanel umfasst.

In einigen Ausführungsformen umfasst der Normspannungs- bzw. Normfrequenzbereich jeweils ein Intervall von zulässigen Spannungs- und Frequenzwerten, während in anderen Ausführungsformen der Normspannungs- bzw. Normfrequenzbereich einzelne zulässige Spannungs- und Frequenzwerte umfasst, die ggf. noch einen Toleranzbereich umfassen.

Ein Wechselrichter (auch Inverter genannt) ist ein elektrisches Gerät, das Gleichspannung in Wechselspannung bzw. Gleichstrom in einen Wechselstrom umrichtet. Im Rahmen der vorliegenden Erfindung werden Wechselrichter betrachtet, die den von Solarpanelen erzeugten Gleichstrom in einen Wechselstrom umwandeln. Wechselrichter können je nach Schaltung sowohl für die Erzeugung von einphasigem Wechselstrom als auch für die Erzeugung von dreiphasigem Wechselstrom (Drehstrom) ausgelegt sein.

In einigen Ausführungsformen der Erfindung ist das Wechselrichterelement als dreiphasiges Wechselrichterelement realisiert, das ohne Transformator auskommt und mittels IGB-Transistoren realisiert ist. Ein IGB-Transistor (Bipolartransistor mit isolierter Gate-Elektrode) ist ein Halbleiterbauelement, das zunehmend in der Leistungselektronik (insbesondere auch für Wechselrichter) verwendet wird, da es Vorteile des Bipolartransistors (gutes Durchlassverhalten, hohe Sperrspannung, Robustheit) und Vorteile eines Feldeffekttransistors (nahezu leistungslose Ansteuerung) vereinigt. Vorteilhaft ist auch eine gewisse Robustheit gegenüber Kurzschlüssen, da der IGB-Transistor den Laststrom begrenzt.

Angewendet werden Wechselrichter dort, wo ein elektrischer Verbraucher Wechselspannung zum Betrieb benötigt, aber nur eine Gleichspannungsquelle, wie in der vorliegenden Erfindung Solarpanele, zur Verfügung stehen, oder dort, wo die Leistung einer Gleichspannungsquelle in das Wechsel- bzw. Drehstromnetz eingespeist werden soll.

Ein Solarpanel (auch Solarmodul oder Photovoltaikmodul genannt) wandelt das Licht der Sonne direkt in elektrische Energie um. Als wichtigste Bestandteile enthält es mehrere Solarzellen. Solarpanele werden einzeln oder zu Gruppen (Strings) verschaltet in Photovoltaikanlagen, kleinen stromnetzunabhängigen Verbrauchern oder zur Stromversorgung von Raumfahrzeugen verwendet. Die Gesamtheit aller Panele für eine Photovoltaikanlage nennt man Solargenerator. Ein Solarpanel wird durch seine elektrischen Anschlusswerte (z. B. Leerlaufspannung und Kurzschlussstrom) charakterisiert. Diese hängen von den Eigenschaften der einzelnen Solarzellen und der Verschaltung der Solarzellen innerhalb des Panels ab. Die im Rahmen dieser Erfindung betrachteten Gruppen von Solarpanelen liefern typischerweise eine Leistung von 2-50 kW. Der Wechselrichter ist dieser Leistung entsprechend ausgelegt.

In einigen Ausführungsformen der Erfindung umfasst die Schalteinrichtung ein Schaltelement, das von der Steuerelektronik veranlasst wird, den wenigstens einen Wechselrichtereingang des Wechselrichters vom Gleichspannungseingang des Wechselrichterelements zu trennen, falls die am Gleichspannungseingang des Wechselrichterelements anliegende Spannung einen oberen Schwellwert überschreitet. In diesen Ausführungsformen misst die Steuerelektronik den am Gleichspannungseingang anliegenden Spannungswert und schaltet ein Schaltelement, das veranlasst, dass eine Gruppe von Solarpanelen nicht mehr zur Spannung am Gleichspannungseingang des Wechselrichterelements beiträgt, so dass der Schwellwert wieder unterschritten wird.

In einigen Ausführungsformen ist der Schwellwert gleich einem gemäß der Norm vorgegebenen maximal zulässigen Spannungswert innerhalb der Wechselrichterschaltung. In einigen Ausführungsformen liegt der obere, nicht zu überschreitende Schwellwert bei 850 V.

In anderen Ausführungsformen umfasst die Schalteinrichtung ein Schaltelement, das von der Steuerelektronik veranlasst wird, den wenigstens einen Wechselrichtereingang des Wechselrichters vom Gleichspannungseingang des Wechselrichterelements zu trennen, falls die Netzspannung und/oder -frequenz des am Wechselrichterausgang anliegenden Netzes außerhalb eines vorgegebenen Normspannungsbereiches bzw. Normfrequenzbereiches liegt. Diese Schaltung wird aktiviert, falls Unregelmäßigkeiten im Netz festgestellt werden. In diesen Fällen darf der Wechselrichter seine Wechselspannung nicht in das Netz einspeisen und muss vom Netz getrennt werden. Das würde jedoch dazu führen, dass die Solarpanele unter einer zu hohen Leerlaufspannung (höher als der Schwellwert) arbeiten, so dass gleichzeitig (oder fast gleichzeitig) mit dem Trennen vom Netz ein Schaltelement aktiviert wird, welches eine Gruppe von Solarpanelen vom Eingang des Wechselrichterelements trennt. Somit bleibt die am Gleichspannungseingang des Wechselrichterelements anliegende Spannung unter dem vorgegebenen Schwellwert. Es sei darauf hingewiesen, dass die Steuerung, der obere Schwellwert, der Normspannungs- und der Normfrequenzbereich vorzugsweise so ausgestaltet bzw. gewählt sind, dass das Trennen der Gruppe von Solarpanelen vom Eingang des Wechselrichterelements vorwiegend durch das Schaltelement dieser Ausführungsform erfolgt, falls Unregelmäßigkeiten im Netz detektiert werden, und das Trennen durch die weiter oben dargestellte Ausführungsform (anhand der Überwachung der am Gleichspannungseingang anliegenden Spannung) nur in "exotischeren" Fällen erfolgt, falls die Spannung am Gleichspannungseingang des Wechselrichterelements trotz im wesentlichen unverändertem Netz dennoch den vorgegebenen Schwellwert überschreiten sollte.

In einigen Ausführungsformen ist das Schaltelement derart zwischen dem einen der wenigstens zwei Wechselrichtereingänge und dem Gleichspannungseingang des Wechselrichterelements elektrisch angeordnet ist, dass es zum Trennen dieses einen Wechselrichtereingangs vom Gleichspannungseingang des Wechselrichterelements diesen Wechselrichtereingang kurzschließt.

In einigen dieser Ausführungsformen umfasst das Kurzschließen ein pulsierendes Kurzschließen mit einem Taktverhältnis, das derart eingestellt ist, dass die Spannung am Gleichspannungseingang des Wechselrichterelements wieder unter den oberen Schwellwert gebracht wird. Beim pulsierenden Kurzschließen im eingestellten Taktverhältnis ist die Pulsdauer des Kurzschlusses im Vergleich zur Pulspause der Kurzschlusstrennung so gewählt, dass die resultierende Spannung im Mittel unter den vorgegeben Schwellwert absinkt. Ist die Spannung wieder unter dem vorgegebenen Schwellwert und liegen auch sonst keine Störungen des am Wechselrichterausgang anliegenden Netzes vor, so kann mit dem Kurzschließen graduell (beispielsweise durch ein gegen Null gehendes Taktverhältnis) aufgehört werden. Das Taktverhältnis wird in einigen Ausführungsformen durch eine Regelschleife mit der gemessenen Spannung als Regelgröße eingestellt.

In einigen Ausführungsformen ist parallel zum (ersten) Schaltelement ein weiteres (zweites) Schaltelement vorgesehen, das von der Steuerelektronik veranlasst wird, zum Trennen des Wechselrichtereingangs vom Gleichspannungseingang des Wechselrichterelements diesen Wechselrichtereingang ebenfalls kurzzuschließen, wobei das erste Schaltelement und das zweite Schaltelement von unterschiedlicher Art sind.

In einigen Ausführungsformen ist das erste Schaltelement ein Transistor, während das zweite Schaltelement ein Thyristor ist.

In einigen Ausführungsformen umfasst die Steuerelektronik einen Mikrocontroller, der die Netzspannung und/oder -frequenz des Netzes am Wechselrichterausgang sowie die Spannung am Gleichspannungseingang des Wechselrichterelements überwacht.

In anderen Ausführungsformen umfasst die Steuerelektronik eine Sicherheitsabschaltung, die die Spannung am Gleichspannungseingang des Wechselrichterelements misst und die Schalteinrichtung veranlasst, den wenigstens einen Wechselrichtereingang des Wechselrichters vom Gleichspannungseingang des Wechselrichterelements zu trennen, falls die am Gleichspannungseingang des Wechselrichterelements anliegende Spannung einen oberen Schwellwert überschreitet. Diese Sicherheitsabschaltung gewährleistet eine besondere Sicherheit, dass die Trennung der wenigstens einen Gruppe von Solarpanelen vom Gleichspannungseingang durchgeführt wird.

In wiederum anderen Ausführungsformen umfasst die Steuerelektronik sowohl einen Mikrocontroller als auch eine Sicherheitsabschaltung und veranlasst das Schaltelement, den Wechselrichtereingang vom Gleichspannungseingang des Wechselrichterelements zu trennen, falls der Mikrocontroller detektiert, dass die am Gleichspannungseingang des Wechselrichterelements anliegende Spannung einen oberen Schwellwert überschreitet und/oder die Netzspannung und/oder -frequenz des am Wechselrichterausgang anliegenden Netzes außerhalb eines vorgegebenen Normspannungsbereiches bzw. Normfrequenzbereiches liegt, oder die am Gleichspannungseingang des Wechselrichterelements anliegende Spannung einen oberen Schwellwert überschreitet.

In einigen Ausführungsformen ist die Steuerelektronik derart ausgelegt, dass sie ein weiteres Schaltelement steuert, das elektrisch zwischen dem Wechselspannungsausgang des Wechselrichterelements und dem Wechselrichterausgang angeordnet ist, und eine Trennung des Wechselrichterelements von dem am Wechselrichterausgang anliegenden Netz veranlasst. Dieses Schaltelement wird aktiviert, das Wechselrichterelement vom Wechselrichterausgang zu trennen, falls der Mikrocontroller detektiert, dass Unregelmäßigkeiten im am Wechselrichterausgang anliegenden Netz vorliegen.

In einigen Ausführungsformen ist der obere Schwellwert derart gewählt, dass er im Lastbetrieb nicht erreicht wird und im Lastbetrieb die wenigstens zwei Gruppen von Solarpanelen zur Spannung am Gleichspannungseingang des Wechselrichterelements beitragen.

In einigen Ausführungsformen sind die Schaltelemente als Relais, Transistor (z.B. Leistungs-MOSFETs oder IGBTs) oder Thyristor umgesetzt. IGBTs und Leistungs-MOSFETs dringen zunehmend in Bereiche vor, die bisher größeren Thyristoren vorbehalten waren, beispielsweise in Wechselrichtern. Der Vorteil von Leistungstransistoren gegenüber Thyristoren ist die Möglichkeit, Transistoren jederzeit ein- oder ausschalten zu können. Herkömmliche Thyristoren können zwar jederzeit eingeschaltet (gezündet) werden, aber nicht bzw. nur mit zusätzlichem Schaltungsaufwand wieder ausgeschaltet werden. Ein Umstand, der vor allem bei Gleichspannungsanwendungen von Nachteil ist.

Einige Ausführungsformen der Erfindung beziehen sich auf ein Verfahren zur Steuerung eines Wechselrichters für Solarpanele. Der Wechselrichter umfasst wenigstens zwei Wechselrichtereingänge, an denen jeweils eine Gruppe von Solarpanelen anschließbar ist, und einen Wechselrichterausgang, an den ein Netz anschließbar ist, sowie ein Wechselrichterelement mit einem Gleichspannungseingang und einem Wechselspannungsausgang, das die an seinem Gleichspannungseingang anliegende Gleichspannung in eine Wechselspannung umwandelt und dem Wechselrichterausgang bereitstellt. Das Verfahren umfasst Überwachen der am Gleichspannungseingang des Wechselrichterelements anliegenden Gleichspannung und der Netzspannung und/oder Netzfrequenz des am Wechselrichterausgang anliegenden Netzes, und Trennen des wenigstens einen Wechselrichtereingangs des Wechselrichters vom Gleichspannungseingang des Wechselrichterelements, falls die am Gleichspannungseingang des Wechselrichterelements anliegende Spannung einen oberen Schwellwert überschreitet und/oder die Netzspannung und/oder -frequenz des am Wechselrichterausgang anliegenden Netzes außerhalb eines vorgegebenen Normspannungs- bzw. Normfrequenzbereiches liegt.

In einigen Ausführungsformen dient der Wechselrichter dazu, den von den Solarpanelen erzeugten Strom in ein dreiphasiges 400 V Wechselstromnetz einzuspeisen.

In einigen Ausführungsformen ist die Leerlaufspannung der wenigstens einen Gruppe von Solarpanelen, die an dem wenigstens einen Wechselrichtereingang anliegt, der durch die Steuerelektronik vom Gleichspannungseingang des Wechselrichterelements trennbar ist, so gewählt, dass die Lastspannung beider Gruppen im wesentlichen gleich der Leerlaufspannung der anderen Gruppe von Solarpanelen ist, die an dem Wechselrichtereingang anliegt, der nicht durch die Steuerelektronik vom Gleichspannungseingang des Wechselrichterelements trennbar ist.

In einigen Ausführungsformen weist die Gruppe von Solarpanelen, die an dem wenigstens einen Wechselrichtereingang anliegt, der durch die Steuerelektronik vom Gleichspannungseingang des Wechselrichterelements trennbar ist, eine geringere Leerlaufspannung auf als die wenigstens eine weitere Gruppe von Solarpanelen, die an dem Wechselrichtereingang anliegt, der nicht durch die Steuerelektronik vom Gleichspannungseingang des Wechselrichterelements trennbar ist. In einigen Ausführungsformen weist die eine Gruppe von Solarpanelen eine Leerlaufspannung von 850 V auf, während die andere Gruppe von Solarpanelen, die an dem Wechselrichtereingang anliegt, der von dem Gleichspannungseingang des Wechselrichterelements getrennt werden kann, eine Leerlaufspannung von 250 V auf.

Kehrt man nun zu der Figur zurück, so sieht man dort einen Wechselrichter 1, der ein Wechselrichterelement 3 und eine Steuerelektronik bestehend aus einem Mikrocontroller 5 und einer Sicherheitsabschaltung 6 umfasst. An den Eingängen 7.1 und 7.2 des Wechselrichters 1 sind zwei Strings 2.1 und 2.2 angeschlossen, die zueinander in Reihe geschaltet sind und am Eingang 8 des Wechselrichterelements 3 eine Gleichspannung U_{ZK} bereitstellen. Jeder String 2.1 und 2.2 besteht wiederum aus in Reihe geschalteten Solarpanelen 4.1-4.3 und 4.4-4.6. Die maximale Leerlaufspannung des Strings 2.1 beträgt im vorliegenden Beispiel 850 V, während String 2.2 eine Leerlaufspannung von 250 V aufweist. Würden beide Strings 2.1 und 2.2 ihre maximale Leerlaufspannung liefern, so würde am Eingang 8 des Wechselrichterelements 3 eine Spannung von 1100 V anliegen, was jedoch gemäß heutiger Norm nicht zulässig ist. Andererseits muss im Lastbetrieb, d.h. wenn die Strings ihre Spannung über einen Wechselrichter in ein Wechselstromnetz einspeisen, eine ausreichend hohe Gleichspannung am Eingang 8 des Wechselrichterelements 3 anliegen, damit dieses die zum Beispiel eine gewünschte 400V- Wechselspannung erzeugen kann.

In der Figur sind für jeden String 2.1 und 2.2 jeweils drei Solarpanele dargestellt, obwohl es eine beliebige Anzahl von Solarpanelen 4 sein kann. Im Extremfall besteht ein String auch nur aus einem einzigen Solarpanel. Die Strings 2.1 und 2.2 sind über die Schalter Q1 und Q2 an die Eingänge 7.1 und 7.2 des Wechselrichters 1 angeschlossen. Diese Schalter dienen dazu, die Solarpanele 4.1-4.6 vom Wechselrichter 1 und dem daran anliegenden Netz zu trennen, zum Beispiel für Wartungsarbeiten. Der Mikrocontroller 5 überwacht sowohl die Spannung am Eingang 8 des Wechselrichterelements 3 als auch die Spannung, Frequenz und Impedanz des am Wechselrichterausgang 9 anliegenden Netzes, in das der Wechselrichter 1 seine erzeugte Wechselspannung einspeist. Ferner steuert der Mikrocontroller 5 auch den Betrieb des Wechselrichterelements 3 selbst. Dies geschieht über ein sogenanntes MPP (Maximum Power Point)-Tracking. Der Maximum Power Point steht für einen Punkt maximaler Leistung. Damit wird der Punkt auf der Strom-Spannungs-Kennlinie (I-U-Kennlinie) eines Solarpanels bezeichnet, bei dem das Solarpanel bzw. der String aus Solarpanelen die maximale Leistung in Abhängigkeit von Einstrahlung und Temperatur erzeugt. Durch MPP-Tracking des angeschlossenen Wechselrichters 1 wird dieser Punkt in fast jedem Betriebszustand gefunden und eingestellt.

Die Spannung am Eingang 8 des Wechselrichterelements 2 wird überwacht, um sicherzustellen, dass eine vorgegebene Schwelle von 850 V nicht überschritten wird. Der Ausgang 9 des Wechselrichters 1 wird auf die Einhaltung von Grenzwerten nach VDE 0126-1-1 überwacht. In dieser Norm sind unter anderem Grenzwerte für Spannung und Frequenz genannt. Die Spannung muss zwischen 80% bis 110% der Nennspannung liegen, die Frequenz muss zwischen 47,5 Hz und 50,2 Hz liegen. Außerhalb dieser Grenzen wird die Einspeisung der erzeugten Wechselspannung in das Netz unterbunden.

Das Hochfahren des Wechselrichters 1 geschieht wie folgt. Zunächst sind alle Schalter K1-K4 geöffnet. Liegt nun eine Spannung von ca. mehr als 500 V an Wechselrichtereingang 7.1 an, so wird der Mikrocontroller 5 mit Strom versorgt und nimmt seine Funktion auf. Der Strom für den Mikrocontroller 5 wird aus dem von den Solarpanelen 4.1-4.6 erzeugten Strom abgezweigt. Der Mikrocontroller 5 überwacht das am Wechselrichterausgang 9 anliegende Netz auf Unregelmäßigkeiten gemäß der Norm VDE 0126-1-1. Ist das Netz in Ordnung, so wird der Schalter K3 aktiviert (geschlossen), das heißt der Wechselrichter 1 speist nun die von String 2.1 erzeugte Spannung in das Netz ein. Kurz darauf wird auch der Schalter K1 aktiviert (geschlossen), so dass dann beide Strings 2.1 und 2.2 ihren erzeugten Strom in das Stromnetz einspeisen. Die Bauart des Schalters K3 unterliegt vorgegebenen Normen, die erfüllt sein müssen, damit eine Einspeisung von Strom in das Netz erfolgen darf.

Detektiert der Mikrocontroller 5 eine Unregelmäßigkeit im Netz, so darf der Wechselrichter 1 nicht mehr in das Netz einspeisen. Deshalb wird der Schalter K3 geöffnet, der den Ausgang des Wechselrichterelements 3 vom Netz trennt. Da die Strings 2.1 und 2.2 nun vom Netz getrennt sind, also unter Leerlaufspannung arbeiten, würde die Spannung U_{ZK} am Gleichspannungseingang 8 des Wechselrichterelements 3 über den vorgegebenen Schwellwert von 850 V ansteigen. Um dies zu verhindern, wird zeitgleich mit dem Öffnen des Schalters K3 auch der Schalter K1 geöffnet, was bewirkt, dass der String 2.2 vom Gleichspannungseingang des Wechselrichterelements 3 getrennt wird, so dass nur der String 2.1 zur Spannung U_{ZK} am Gleichspannungseingang 8 des Wechselrichterelements 3 beiträgt. Sobald der String 2.2 vom Gleichspannungseingang des Wechselrichterelements 3 getrennt ist, kann die dort anliegende Spannung im Normalfall nicht über den Schwellwert ansteigen.

Sollte die Spannung dennoch den vorgegebenen Schwellwert von 850 V überschreiten, so ist für diesen Fall ein weiterer Steuerkreis vorgesehen, der wie folgt funktioniert. Der Mikrocontroller 5 überwacht zu diesem Zweck die am Gleichspannungseingang 8 des Wechselrichterelements 3 anliegende Spannung. Steigt die Spannung über den vorgegebenen Schwellwert an, so veranlasst der Mikrocontroller 5, dass der Schalter K2 aktiviert (geschlossen) wird. Dies bewirkt, dass der Eingang 7.2 des Wechselrichterelements 3, an dem der String 2.2 anliegt, kurzgeschlossen wird und der String 2.2 nicht mehr zur Gleichspannung am Eingang 8 des Wechselrichterelements 3 beiträgt. Neben dem Schalter K2 ist ein weiterer Schalter K4, hier ein Transistor, vorgesehen, der ebenfalls einen Kurschluss herbeiführt. Dieser Schalter K4 ist von einer anderen Bauart als der Schalter K2 und wird immer dann aktiviert, wenn Schalter K2 von dem Mikrocontroller aktiviert wird. Mit dem Kurzschliessen des Strings 2.2 anstelle einer Unterbrechung (wie mittels des Schalters K1) wird die andernfalls bei einer Unterbrechung unter Last auftretende Funkenbildung des Schaltvorgangs verhindert.

Parallel zu den Schaltern K2 und K4 ist eine Diode 11 vorgesehen, die für den Stromfluss zu String 2.1 bei geöffnetem Schalter K1 sorgt. Parallel zur Diode 11 und den Schaltern K2 und K4 ist ein RC-Glied bestehend aus einem Widerstand 12 und einem Elektrolytkondensator 13 vorgesehen. Das RC-Glied bewirkt ein Löschen des Funkens beim Öffnen des Schalters K1.

Der Mikrocontroller 5 kann logisch und/oder physisch in zwei Unterteilungen eingeteilt sein. Der erste Steuerkreis steuert die Schalter K1 und K3 in Abhängigkeit von im Netz auftretenden Unregelmäßigkeiten (das heißt, wenn die Netzspannung-und/oder Netzfrequenz außerhalb vorgegebener Normbereiche liegen). Sollte eine Unregelmäßigkeit im Netz auftreten, so wird einerseits der Schalter K3 geöffnet, da in diesem Fall keine Einspeisung in das Netz stattfinden darf und andererseits der Schalter K1 geöffnet, um den String 2.2 vom Gleichspannungseingang 8 des Wechselrichterelements 3 zu trennen. Der zweite Steuerkreis überwacht die Spannung am Gleichspannungseingang 8 des Wechselrichterelements 3 auf eine Überschreitung eines Schwellwerts hin und veranlasst die Trennung des Strings 2.2, falls ein Schwellwert überschritten wird, mittels Kurzschließens des Eingangs 7.2 des Wechselrichters.

Neben dem Mikrocontroller 5 ist die Sicherheitsabschaltung 6 vorgesehen, die ebenfalls die Schalter K2 und K4 aktiviert, falls die Spannung am Gleichspannungseingang 8 des Wechselrichterelements 3 einen Schwellwert übersteigt. Dazu misst die Sicherheitsabschaltung 6 die am Gleichspannungseingang 8 des Wechselrichterelements 3 anliegende Spannung und schaltet die Schalter K2 und/oder K4, die einen Kurschluss bewirken. Im vorliegenden Beispiel ist die Sicherheitsabschaltung 6 mit dem Mikrocontroller 5 über ein ODER-Glied verknüpft, so dass ein Kurzschluss erfolgt, wenn entweder der Mikrocontroller 5 oder die Sicherheitsabschaltung 6 (oder beide) ein Überschreiten des Schwellwerts detektieren. Die Sicherheitsabschaltung 6 gewährleistet daher eine größere Sicherheit bezüglich des Kurzschließens des Wechselrichtereingangs 7.2 vom Gleichspannungseingang 8 des Wechselrichterelements 3, da sie im vorliegenden Beispiel zusätzlich zum Mikrocontroller 5 vorgesehen ist.

Wie im allgemeinen Teil der Beschreibung erläutert, kann das Kurzschließen auch in Form eines pulsierenden Kurzschließens geschehen. Dabei wird in einem bestimmten Taktverhältnis die Kurzschlussverbindung immer wieder unterbrochen, was bewirkt, dass die Spannung graduell unter den vorgegebenen Schwellwert sinkt.

Am Gleichspannungseingang 8 des Wechselrichterelements 3 sind zwei in Reihe geschaltete Elektrolytkondensatoren 14 und 15 vorgesehen. Wegen der hohen Spannung (850 V) sind hier zwei Elektrolytkondensatoren vorgesehen, die eine Glättung des Eingangsstromes bewirken. Ferner stützen sie den Eingang des Wechselrichterelements 3 gegenüber Spannungsschwankungen am Wechselrichterausgang 9 ab. Anstelle der zwei Elektrolytkondensatoren 14, 15 könnte die Abstützung auch durch einen Standardkondensator mit niedriger Kapazität (1/20 der Kapazität des Elektrolytkondensators) erfolgen.

Der Ausgang des Wechselrichterelements 3 ist mit drei Induktivitäten 16.1, 16.2 und 16.3 verbunden. Der Eingang 8 des Wechselrichterelements 3 ist ferner über sechs Kondensatoren 17.1-17.6 gemäß der Schaltung der Figur mit den drei Phasen des Wechselrichterausganges 10 verbunden. Die Induktivitäten 16 und die Kondensatoren 17 bilden zusammen ein LC-Element, welches als Tiefpassfilter fungiert. Aufgrund der Transistoren des Wechselrichterelements 3 und deren Schalteigenschaften stellt der Ausgang 10 des Wechselrichterelements 3 im Wesentlichen eine Rechtecksspannung bereit. Das LC-Element glättet im Wesentlichen die Flanken, so dass sich ein sinusförmiger Ausgangsstrom mit geringem Oberwellenanteil ergibt, der über den Wechselrichterausgang 9 in das Netz eingespeist wird.

Obwohl bestimmte Verfahren und Produkte, die gemäß den Lehren der Erfindung gebaut wurden, hier beschrieben wurden, wird der Schutzbereich dieses Patents dadurch nicht beschränkt. Im Gegenteil deckt dieses Patent alle Ausführungsformen der Lehren der Erfindung ab, die unter den Schutzbereich der beiliegenden Ansprüche fallen, entweder wortsinngemäß oder im Sinne der Äquivalenzlehre.

## Patentansprüche

1. Wechselrichter (1) für Solarpanele (4), umfassend
wenigstens zwei Wechselrichtereingänge (7.1, 7.2), an denen jeweils eine Gruppe von Solarpanelen anschließbar ist, und einen Wechselrichterausgang (9), an den ein Netz anschließbar ist,
ein Wechselrichterelement (3) mit einem Gleichspannungseingang (8) und einem Wechselspannungsausgang (10), das die an seinem Gleichspannungseingang (8) anliegende Gleichspannung in eine Wechselspannung umwandelt und dem Wechselrichterausgang (9) bereitstellt,
eine Steuerelektronik (5, 6), die die am Gleichspannungseingang (8) des Wechselrichterelements (3) anliegende Gleichspannung und die Netzspannung und/oder die Netzfrequenz des am Wechselrichterausgang (9) anliegenden Netzes überwacht,
eine Schalteinrichtung (K1, K2), die elektrisch zwischen einem der wenigstens zwei Wechselrichtereingänge (7) und dem Gleichspannungseingang (8) des Wechselrichterelements (3) angeordnet ist,
wobei die beiden wenigstens zwei Wechselrichtereingänge (7.1, 7.2) des Wechselrichters (1) in Reihe mit dem Gleichspannungseingang (8) des Wechselrichterelements (3) verbunden sind,
wobei die Steuerelektronik derart ausgestaltet ist, dass sie die Schalteinrichtung (K1, K2) veranlasst, den wenigstens einen Wechselrichtereingang (7.2) des Wechselrichters (1) vom Gleichspannungseingang (8) des Wechselrichterelements (3) zu trennen, falls die am Gleichspannungseingang (8) des Wechselrichterelements (3) anliegende Spannung einen oberen Schwellwert überschreitet und/oder die Netzspannung und/oder -frequenz des am Wechselrichterausgang (9) anliegenden Netzes außerhalb eines vorgegebenen Normspannungs- bzw. Normfrequenzbereiches liegt.

2. Wechselrichter gemäß Anspruch 1, wobei die Schalteinrichtung ein Schaltelement (K2) umfasst, das von der Steuerelektronik veranlasst wird, den wenigstens einen Wechselrichtereingang (7.2) des Wechselrichters (1) vom Gleichspannungseingang (8) des Wechselrichterelements (3) zu trennen, falls die am Gleichspannungseingang (8) des Wechselrichterelements (3) anliegende Spannung einen oberen Schwellwert überschreitet.

3. Wechselrichter gemäß Anspruch 1 oder 2, wobei die Schalteinrichtung ein Schaltelement (K1) umfasst, das von der Steuerelektronik veranlasst wird, den wenigstens einen Wechselrichtereingang (7.2) des Wechselrichters (1) vom Gleichspannungseingang (8) des Wechselrichterelements (3) zu trennen, falls die Netzspannung und/oder -frequenz des am Wechselrichterausgang (9) anliegenden Netzes außerhalb eines vorgegebenen Normspannungsbereiches bzw. Normfrequenzbereiches liegt.

4. Wechselrichter gemäß Anspruch 2, wobei das Schaltelement (K2) derart zwischen dem einen (7.2) der wenigstens zwei Wechselrichtereingänge (7.1, 7.2) und dem Gleichspannungseingang (8) des Wechselrichterelements (3) elektrisch angeordnet ist, dass es zum Trennen dieses einen Wechselrichtereingangs (7.2) vom Gleichspannungseingang (8) des Wechselrichterelements (3) diesen Wechselrichtereingang (7.2) kurzschließt.

5. Wechselrichter gemäß Anspruch 4, wobei das Kurzschließen ein pulsierendes Kurzschließen mit einem Taktverhältnis umfasst, das derart eingestellt ist, dass die Spannung am Gleichspannungseingang (8) des Wechselrichterelements (3) wieder unter den oberen Schwellwert gebracht wird.

6. Wechselrichter (1) gemäß Anspruch 4 oder 5, wobei parallel zum Schaltelement (K2) ein zweites Schaltelement (K4) vorgesehen ist, das von der Steuerelektronik veranlasst wird, zum Trennen des Wechselrichtereingangs (7.2) vom Gleichspannungseingang (8) des Wechselrichterelements (3) diesen Wechselrichtereingang (7.2) ebenfalls kurzzuschließen, wobei das erste Schaltelement (K2) und das zweite Schaltelement (K4) von unterschiedlicher Art sind.

7. Wechselrichter (1) gemäß einem der vorhergehenden Ansprüche, wobei die Steuerelektronik einen Mikrocontroller (5) umfasst, der die Netzspannung und/oder - frequenz des Netzes am Wechselrichterausgang (9) überwacht, sowie die Spannung am Gleichspannungseingang (8) des Wechselrichterelements (3).

8. Wechselrichter (1) gemäß einem der vorhergehenden Ansprüche, wobei die Steuerelektronik eine Sicherheitsabschaltung (6) umfasst, die die Spannung am Gleichspannungseingang (8) des Wechselrichterelements (3) misst und das Schaltelement (K2) veranlasst, den wenigstens einen Wechselrichtereingang (7.2) des Wechselrichters (1) vom Gleichspannungseingang (8) des Wechselrichterelements (3) zu trennen, falls die am Gleichspannungseingang (8) des Wechselrichterelements (3) anliegende Spannung einen oberen Schwellwert überschreitet.

9. Wechselrichter (1) gemäß einem der Ansprüche 1 bis 6, wobei die Steuerelektronik einen Mikrocontroller (5) und eine Sicherheitsabschaltung (6) umfasst und das Schaltelement (K2) veranlasst, den Wechselrichtereingang (7.2) vom Gleichspannungseingang (8) des Wechselrichterelements (3) zu trennen, falls der Mikrocontroller (5) detektiert, dass die am Gleichspannungseingang (8) des Wechselrichterelements (3) anliegende Spannung einen oberen Schwellwert überschreitet und/oder die Netzspannung und/oder -frequenz des am Wechselrichterausgang (9) anliegenden Netzes außerhalb eines vorgegebenen Normspannungsbereiches bzw. Normfrequenzbereiches liegt, oder die am Gleichspannungseingang (8) des Wechselrichterelements (3) anliegende Spannung einen oberen Schwellwert überschreitet.

10. Wechselrichter (1) gemäß einem der vorhergehenden Ansprüche, wobei die Steuerelektronik ausgelegt ist, dass sie ein weiteres Schaltelement (K3) steuert, das elektrisch zwischen dem Wechselspannungsausgang (10) des Wechselrichterelements (3) und dem Wechselrichterausgang (9) angeordnet ist, und eine Trennung des Wechselrichterelements (3) von dem am Wechselrichterausgang (9) anliegenden Netz veranlasst.

11. Wechselrichter (1) gemäß einem der vorhergehenden Ansprüche, wobei der obere Schwellwert derart gewählt ist, dass er im Lastbetrieb nicht erreicht wird und im Lastbetrieb die wenigstens zwei Gruppen (2.1, 2.2) von Solarpanelen (4) zur Spannung am Gleichspannungseingang (8) des Wechselrichterelements (3) beitragen.

12. Verfahren zur Steuerung eines Wechselrichters (1) für Solarpanele, wobei der Wechselrichter (1) wenigstens zwei Wechselrichtereingänge (7.1, 7.2), an denen jeweils eine Gruppe von Solarpanelen anschließbar ist, und einen Wechselrichterausgang (9), an den ein Netz anschließbar ist, umfasst, sowie ein Wechselrichterelement (3) mit einem Gleichspannungseingang (8) und einem Wechselspannungsausgang (10), das die an seinem Gleichspannungseingang (8) anliegende Gleichspannung in eine Wechselspannung umwandelt und dem Wechselrichterausgang (9) bereitstellt, wobei das Verfahren umfasst:
Überwachen der am Gleichspannungseingang (8) des Wechselrichterelements (3) anliegenden Gleichspannung und der Netzspannung und/oder Netzfrequenz des am Wechselrichterausgang (9) anliegenden Netzes, und
Trennen des wenigstens einen Wechselrichtereingangs (7.2) des Wechselrichters (1) vom Gleichspannungseingang (8) des Wechselrichterelements (3), falls die am Gleichspannungseingang (8) des Wechselrichterelements (3) anliegende Spannung einen oberen Schwellwert überschreitet und/oder die Netzspannung und/oder ―frequenz des am Wechselrichterausgang (9) anliegenden Netzes außerhalb eines vorgegebenen Normspannungs- bzw. Normfrequenzbereiches liegt.

13. Verfahren nach Anspruch 12, bei dem die Leerlaufspannung der wenigstens einen Gruppe (2.2) von Solarpanelen, die an dem wenigstens einen Wechselrichtereingang (7.2) anliegt, der durch die Steuerelektronik vom Gleichspannungseingang (8) des Wechselrichterelements (3) trennbar ist, so gewählt wird, dass die Lastspannung beider Gruppen (2.1, 2.2) im Wesentlichen gleich der Leerlaufspannung der anderen Gruppe (2.1) von Solarpanelen ist, die an dem Wechselrichtereingang (7.1) anliegt, der nicht durch die Steuerelektronik vom Gleichspannungseingang (8) des Wechselrichterelements (3) trennbar ist.
